# EUROPÄISCHE PATENTSCHRIFT

(11) **EP 1 188 982 B1**
(45) Veröffentlichungstag und Bekanntmachung des Hinweises auf die Patenterteilung: **28.09.2005**
(21) Anmeldenummer: 01810871.2
(22) Anmeldetag: 10.09.2001
(51) Int. Cl.: F16L 55/033

(54) **Schutz-und Schalldämmgehäuse für Rohrleitungen**
Protective and noise damping enclosure for pipes
Carter de protection et anti-bruit pour des tuyaux

(30) Priorität: 13.09.2000 CH 17762000
(43) Veröffentlichungstag der Anmeldung: 20.03.2002
(73) Patentinhaber: GEBERIT TECHNIK AG, 8645 Jona (CH)
(72) Erfinder: Scholz, Jürg, 8841 Gross (CH); Allemann, Rudolf, 8722 Kaltbrunn (CH); Marti, Silvio, 8640 Rapperswil (CH); Wili, Hansruedi, 8645 Jona (CH); Tanner, Werner, 8713 Uerikon (CH)
(74) Vertreter: Groner, Manfred

(56) Entgegenhaltungen:
- DE-A- 19 509 399
- US-A- 4 449 554

## Beschreibung

Die Erfindung betrifft ein Schutz- und Schalldämmgehäuse für Rohrleitungen der Haustechnik gemäss Oberbegriff des Anspruchs 1.

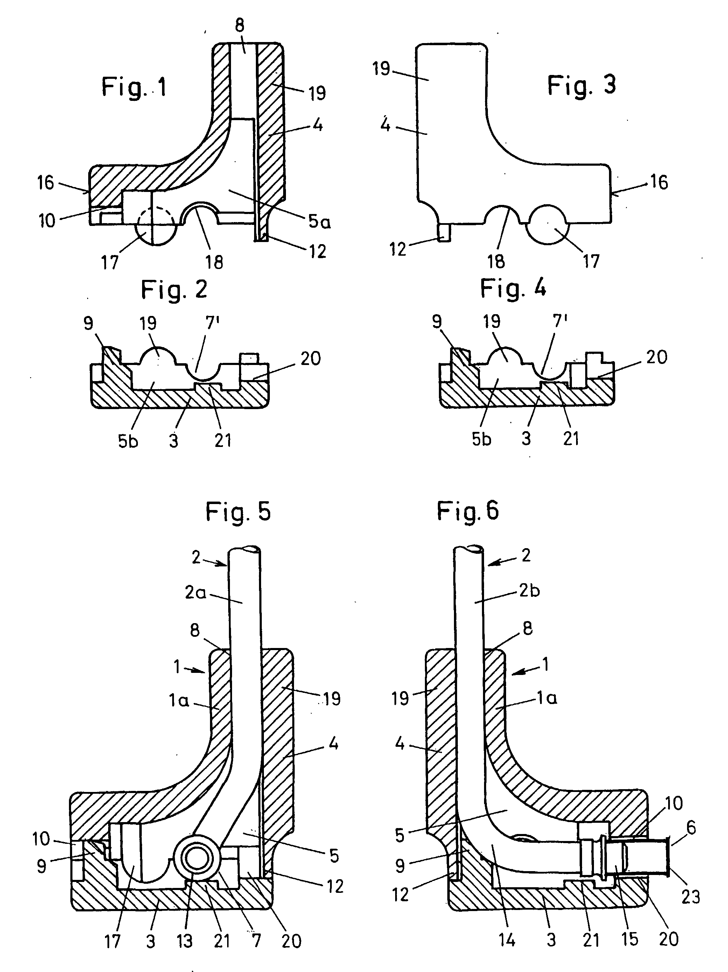

Ein Gehäuse der genannten Art ist im Stand der Technik durch die DE 195 09 399 C2 bekannt geworden. Es besteht aus zwei zusammengefügten Kunststoffteilen mit vertikaler Trennlinie. Um die Eintrittsöffnungen zu bilden, müssen angeformte Teile entlang von Schwächungsstellen herausgebrochen werden. Bei der Ausführung nach Figur 3 sind wahlweise eine frontseitige Öffnung oder zwei seitliche Öffnungen durch Herausbrechen entsprechender Teile erschliessbar. Das Herausbrechen von angeformten Teilen ist zeitaufwendig und erfordert spezielle Werkzeuge. Zudem besteht die Gefahr, dass die Gehäuse beim Herausbrechen verletzt werden und dadurch die angestrebte Schalldämmung beeinträchtigt wird.

Der Erfindung liegt die Aufgabe zugrunde, ein Gehäuse der genannten Art zu schaffen, das eine einfachere Montage ermöglicht und das dennoch kostengünstig herstellbar ist.

Die US 4,441,554 offenbart ein Isoliergehäuse mit zwei aneinanderlegbaren Teilen. Diese Teile bestehen jeweils aus einer Schale und einem in diese eingelagerten Isolierteil. Zur Bildung von Durchtrittsöffnungen für ein Rohr, müssen an Kanten der Schalen Wandteile herausgeschnitten oder herausgebrochen werden. Die eingelegten Isolierteile sind aus weichem Material, beispielsweise aus Glasfasern hergestellt und passen sich an das Rohr an. Auch bei diesem Isoliergehäuse ist es somit erforderlich, bei der Montage mit einem entsprechenden Werkzeug Wandteile zu entfernen.

Die Aufgabe ist beim gattungsgemässen Schutz- und Schalldämmgehäuse gemäss Anspruch 1 gelöst. Beim erfindungsgemässen Gehäuse werden die Eintrittsöffnungen durch unterschiedliches Zusammenfügen eines Sockelteils und eines Aufsatzteils gebildet. Bei der einen Fügung ist die eine Eintrittsöffnung offen und bei der anderen Fügung die andere Eintrittsöffnung. Das Schliessen und Öffnen der Eintrittsöffnungen kann damit durch Umstecken eines der Gehäuseteile erfolgen. Ein Herausbrechen angeformter Teile entlang von Schwächungslinien entfällt damit. Das Umstecken ist sehr einfach und ohne Werkzeuge möglich. Die Eintrittsöffnungen sind in jedem Fall exakt gebildet und eine Verletzungsgefahr kann ausgeschlossen werden. Die Herstellung der Gehäuseteile ist eher noch einfacher, da Schwächungsbereiche nicht vorgesehen sind. Vorzugsweise ist das Gehäuse so ausgebildet, dass wahlweise ein Bogenstück oder ein T-Stück der Rohrleitung in das Gehäuse einsetzbar ist. Beim Bogenstück wird stirnseitig eine Öffnung benutzt und beim T-Stück zwei seitliche Eintrittsöffnungen. Die Austrittsöffnung ist vorzugsweise in beiden Fällen die gleiche und führt vertikal durch das Aufsatzteil nach oben.

Vorzugsweise wird das erfindungsgemässe Gehäuse für Abzweigleitungen verwendet, an denen ein Heizkörper anzuschliessen ist. Denkbar ist aber auch eine Anwendung bei anderen Rohrleitungen der Haustechnik, insbesondere für Sanitärleitungen.

Ein Ausführungsbeispiel der Erfindung wird nachfolgend anhand der Zeichnung näher erläutert. Es zeigen:
- Figur 1: ein Schnitt durch ein Aufsatzteil,
- Figur 2 und 4: ein Schnitt durch ein Sockelteil,
- Figur 3: eine Ansicht des Aufsatzteils,
- Figur 5: ein Schnitt durch ein erfindungsgemässes Gehäuse und eine Ansicht eines T-Rohrstücks,
- Figur 6: ein Schnitt durch ein erfindungsgemässes Gehäuse mit einer Ansicht eines Bogenrohrstücks,
- Figur 7: eine Ansicht des Aufsatzteils
- Figur 8: eine Ansicht der Unterseite des Aufsatzteils,
- Figur 9: eine weitere Ansicht des Aufsatzteils,
- Figur 10: ein Schnitt durch das Sockelteil entlang der Linie X-X der Figur 11,
- Figur 11: eine Ansicht der Oberseite des Sockelteil und
- Figur 12: ein Schnitt durch das Sockelteil entlang der Linie XI-XI der Figur 11.

Das Gehäuse 1 dient zur Aufnahme des Anschlussbereiches einer Rohrleitung 2, insbesondere einer Wasserleitung für eine Heizungsanlage. Die Rohrleitung 2 weist gemäss Figur 5 ein T-Rohrstück 2a oder gemäss Figur 6 ein Bogenstück 2b auf. An dem hier nicht gezeichneten oberen Ende werden diese Rohrstücke 2a und 2b jeweils an ein hier nicht gezeigten Heizkörper angeschlossen. Beim T-Rohrstück 2a sind am unteren Ende zwei von einander weggerichtete Anschlussenden 13 angebracht, an denen weitere Leitungsbereiche angeschlossen werden. Beim Bogenrohrstück 2b ist am unteren Ende lediglich ein Anschlussende 15 angeordnet. Der Anschluss kann mittels einer Schraubverbindung oder einer Steckverbindung oder auch einer Pressverbindung erfolgen.

Beim Gehäuse 1a gemäss Figur 5 sind eine Austrittsöffnung 8 sowie zwei seitliche Eintrittsöffnungen 7 vorgesehen. Beim Gehäuse 1b gemäss Figur 6 sind lediglich eine Austrittsöffnung 8 sowie eine Eintrittsöffnung 6 vorgesehen.

Die Gehäuse 1a und 1b weisen jeweils ein Sockelteil 3 sowie ein Aufsatzteil 4 auf. Sie unterscheiden sich lediglich durch die Orientierung des Aufsatzteils 4. In beiden Fällen sind somit der Sockelteil 3 und der Aufsatzteil 4 identisch. Ist der Aufsatzteil 4 gemäss Figur 5 bezüglich des Sockelteils 3 angeordnet, so bilden die beiden Teile 3 und 4 eine Austrittsöffnung 8 sowie die beiden seitlichen Eintrittsöffnungen 7. Ist der Aufsatzteil 4 gemäss Figur 6 orientiert, so bilden diese beiden Teile eine Austrittsöffnung 8 sowie eine frontseitige Eintrittsöffnung 6. Die Eintrittsöffnungen sind somit an das entsprechende Rohrstück 2a bzw. 2b angepasst. Eine Umwandlung ist in einfacher Weise lediglich durch ein Umstecken des Aufsatzteils 4 möglich. Selbstverständlich kann entsprechend auch das Sockelteil 3 umgesteckt werden.

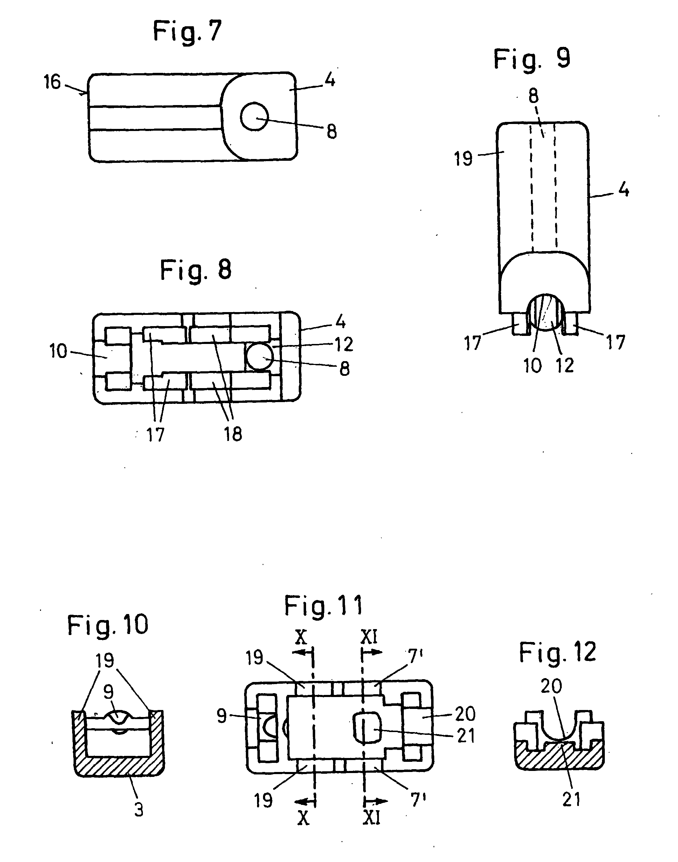

Die beiden Gehäuseteile 4 und 3 bestehen vorzugsweise aus einem schalldämmenden Kunststoff, beispielsweise aus geschäumten Polyaethylen oder Polyurethan. Sie sind vorzugsweise formschlüssig zusammengesteckt, sie können aber auch miteinander verleimt sein. Das Aufsatzteil 4 bildet einen Innenraum 5a, der mit dem Innenraum 5b des Sockelteils 3 gemäss Figur 5 bzw. 6 einen Innenraum 5 zur Aufnahme und Positionierung des Rohrstücks 2a bzw. 2b dient. Der Innenraum 5a führt zur senkrecht nach oben ausgerichteten Austrittsöffnung 8. Nach unten ist der Innenraum 5a wie ersichtlich offen. Wie die Figuren 1 und 8 zeigen, sind am Aufsatzteil 4 unterseitig und jeweils im Abstand zueinander gegenüberliegend jeweils zwei halbkreisförmige Ansätze 17 und ebenfalls halbkreisförmige Ausnehmungen 18 angeordnet. Korrespondierend dazu sind am Sockelteil 3 ebenfalls im Abstand gegenüberliegend paarweise halbkreisförmige Ansätze 19 und halbkreisförmige Ausnehmungen 7' angeordnet. Es wird hierbei insbesondere auf Figur 11 verwiesen.

Am Aufsatzteil 4 sind zudem an einer Frontseite 16 etwa mittig eine Ausnehmung 10 und gegenüberliegend ein nach unten ragender halbkreisförmiger Ansatz 12 angeformt. Es wird hierzu auch auf die Figuren 8 und 9 verwiesen. Korrespondierend zu der Ausnehmung 10 und dem Ansatz 12 weist der Sockelteil 3 ein nach oben ragender Ansatz 9 sowie eine Ausnehmung 20 auf. Es wird hierzu auf die Figuren 10 bis 12 verwiesen.

Sind nun die beiden Gehäuseteile 3 und 4 gemäss Figur 5 zusammengesetzt, so verschliesst wie ersichtlich der Ansatz 9 die Ausnehmung 10 und der Ansatz 12 verschliesst die Öffnung 20. Hingegen liegen die Ausnehmungen 18 und 7' jeweils gegenüber und bilden eine kreisförmige Eintrittsöffnung 7. Die Eintrittsöffnungen 7 sind somit an das T-Rohrstück 2a angepasst. Das T-Rohrstück 2a ist allseitig umschlossen und damit gegen mechanische Beschädigung geschützt und zudem schallgedämmt.

Sind das Sockelteil 3 und das Aufsatzteil 4 gemäss Figur 6 zur Aufnahme eines Bogenrohrstückes 2b zusammengefügt, so sind die beiden Ausnehmungen 18 jeweils durch einen Ansatz 19 und die beiden Ausnehmungen 7 jeweils durch einen Ansatz 17 verschlossen. Hingegen liegen die beiden Ausnehmungen 10 und 20 gegenüber und bilden die im Querschnitt kreisförmige Eintrittsöffnung 6, welche das Anschlussende 15 aufnimmt und umschliesst. Der Ansatz 9 stützt und positioniert gemäss Figur 6 die Biegung 14 des Bogenrohrstückes 2b. Eine entsprechende Positionierung wird für das T-Rohrstück 2a von einer Erhöhung 21 übernommen, wie die Figur 5 deutlich zeigt.

Beim Montieren wird in das Aufsatzteil 4 das T-Rohrstück 2a oder das Bogenrohrstück 2b von unten eingesetzt. Anschliessend wird nun dieses zusammen mit dem Aufsatzteil 4 in entsprechender Orientierung auf das Sockelteil 3 aufgesetzt. Das so gebildete Gehäuse 1a bzw. 1b wird auf einem hier nicht gezeigten Gebäudeboden ausgerichtet und das Rohrstück 2a bzw. 2b wird an einen Heizkörper sowie an die im Boden zu verlegenden Heizungsleitungsteile angeschlossen. Das Gehäuse 1 bildet bei der Montage einen mechanischen Schutz und nach dem Einbau ein Schallschutz. Beim Einbau können die Anschlussenden 13 und 15 durch eine Bauschutzhülse 23 geschützt sein, wie die Figur 6 zeigt.

## Patentansprüche

1. Schutz- und Schalldämmgehäuse für Rohrleitungen (2) der Haustechnik, mit wenigstens zwei Gehäuseteilen (3,4), die zusammenfügbar sind und im zusammengefügten Zustand einen Innenraum (5) bilden, welcher den zu dämmenden Bereich der Rohrleitung (2) aufnehmen kann, mit wenigstens zwei wahlweisen Eintrittsöffnungen (6,7) und wenigstens einer Austrittsöffnung (8) für die zu dämmende Rohrleitung (2), **dadurch gekennzeichnet, dass** ein Gehäuseteil (3) als Sockelteil und ein Gehäuseteil (4) als Aufsatzteil ausgebildet sind und dass die beiden Gehäuseteile (3,4) unterschiedlich zusammenfügbar sind und in der einen Fügung die eine Eintrittsöffnung und in der anderen Fügung die andere Eintrittsöffnung gebildet wird.

2. Gehäuse nach Anspruch 1, **dadurch gekennzeichnet, dass** der Aufsatzteil (4) in zwei unterschiedlichen Orientierungen auf den Sockelteil (3) aufsetzbar ist.

3. Gehäuse nach Anspruch 2, **dadurch gekennzeichnet, dass** der Aufsatzteil (4) um 180° versetzt auf dem Sockelteil (3) aufsetzbar ist.

4. Gehäuse nach einem der Ansprüche 1 bis 3, **dadurch gekennzeichnet, dass** der Aufsatzteil (4) L-förmig ausgebildet ist und stirnseitig (16) eine Ausnehmung (10) aufweist, die bei der einen Fügung durch einen Ansatz (9) des Sockelteils (3) verschlossen ist und die bei der anderen Fügung offen ist und eine stirnseitige Eintrittsöffnung (6) bildet.

5. Gehäuse nach Anspruch 4, **dadurch gekennzeichnet, dass** der Aufsatzteil (4) an seiner Unterseite seitlich je eine Ausnehmung (18) und einen Ansatz (17) aufweist und dass in der einen Fügung die Ausnehmungen (18) durch jeweils einen Ansatz (19) des Sockelteils (3) verschlossen ist und dass in der anderen Fügung die Ausnehmungen (17) des Aufsatzteils (4) mit Ausnehmungen (7') des Sockelteils (3) seitliche Eintrittsöffnungen (7) bilden.

6. Gehäuse nach einem der Ansprüche 1 bis 5, **dadurch gekennzeichnet, dass** der Aufsatzteil (4) und der Sockelteil (3) formschlüssig zusammengefügt sind.

7. Gehäuse nach einem der Ansprüche 1 bis 6, **dadurch gekennzeichnet, dass** bei der einen Fügung zwei seitliche Eintrittsöffnungen (7) und bei der anderen Fügung eine frontseitige Eintrittsöffnung (6) gebildet sind bzw. ist.

8. Gehäuse nach einem der Ansprüche 1 bis 7, **dadurch gekennzeichnet, dass** am Sockelteil (3) und/oder am Aufsatzteil (4) Führungsmittel (21,9) zur Positionierung und Halterung eines Rohrleitungsstückes (2a,2b) angeformt sind.

9. Gehäuse nach einem der Ansprüche 1 bis 8, **dadurch gekennzeichnet, dass** es für Abzweigleitungen an einem Heizkörperanschluss vorgesehen ist.

10. Gehäuse nach einem der Ansprüche 1 bis 9, **dadurch gekennzeichnet, dass** die Trennlinie zwischen dem Aufsatzteil (4) und dem Sockelteil (3) in der Längsachse wenigstens einer Eintrittsöffnung (6,7) verläuft.

## Claims

1. Protective and noise-damping enclosure for domestic pipes (2), comprising at least two enclosure parts (3, 4) which can be assembled and which, in the assembled state, form an inner space (5) which can accommodate the region of the pipe (2) which is to be damped, and comprising at least two optional inlet openings (6, 7) and at least one outlet opening (8) for the pipe (2) which is to be damped, **characterized in that** one enclosure part (3) is designed as a base part and one enclosure part (4) is designed as a top part, and **in that** the two enclosure parts (3, 4) can be differently assembled, with one inlet opening being formed in one assembly and the other inlet opening being formed in the other assembly.

2. Enclosure according to Claim 1, **characterized in that** the top part (4) can be fitted onto the base part (3) in two different orientations.

3. Enclosure according to Claim 2, **characterized in that** the top part (4), turned through 180°, can be fitted onto the base part (3).

4. Enclosure according to one of Claims 1 to 3, **characterized in that** the top part (4) is of L-shaped design and has at its front end (16) a cutout (10) which, in one assembly, is closed by a projection (9) of the base part (3) and which, in the other assembly, is open and forms a front-end inlet opening (6).

5. Enclosure according to Claim 4, **characterized in that** the underside of the top part (4) is provided laterally with a respective cutout (18) and a projection (17) and **in that**, in one assembly, the cutouts (18) are closed by a respective projection (19) of the base part (3) and **in that**, in the other assembly, the cutouts (18) of the top part (4) form lateral inlet openings (7) with cutouts (7') of the base part (3).

6. Enclosure according to one of Claims 1 to 5, **characterized in that** the top part (4) and the base part (3) are assembled in a positively locking manner.

7. Enclosure according to one of Claims 1 to 6, **characterized in that** two lateral inlet openings (7) are formed in one assembly and a frontal inlet opening (6) is formed in the other assembly.

8. Enclosure according to one of Claims 1 to 7, **characterized in that** guide means (21, 9) for positioning and retaining a pipe section (2a, 2b) are integrally formed on the base part (3) and/or on the top part (4).

9. Enclosure according to one of Claims 1 to 8, **characterized in that** it is intended for branch lines at a radiator connection.

10. Enclosure according to one of Claims 1 to 9, **characterized in that** the parting line between the top part (4) and the base part (3) extends in the longitudinal axis of at least one inlet opening (6, 7).

## Revendications

1. Carter de protection et anti-bruit pour des conduites tubulaires (2) de la technique ménagère, comprenant au moins deux parties de carter (3, 4) qui peuvent être assemblées et qui forment dans l'état assemblé un espace interne (5) qui peut recevoir la région de la conduite tubulaire (2) devant être protégée, avec au moins deux ouvertures d'entrée sélectives (6, 7) et au moins une ouverture de sortie (8) pour la conduite tubulaire (2) à protéger, **caractérisé en ce qu'**une partie de carter (3) est réalisée en tant que partie de socle et qu'une partie de carter (4) est réalisée en tant que partie de couvercle et **en ce que** les deux parties de carter (3, 4) peuvent être assemblées différemment et que dans un assemblage est formée une ouverture d'entrée et dans l'autre assemblage est formée l'autre ouverture d'entrée.

2. Carter selon la revendication 1, **caractérisé en ce que** la partie de couvercle (4) peut être posée sur la partie de socle (3) suivant deux orientations différentes.

3. Carter selon la revendication 2, **caractérisé en ce que** la partie de couvercle (4) peut être posée sur la partie de socle (3) de manière décalée de 180°.

4. Carter selon l'une quelconque des revendications 1 à 3, **caractérisé en ce que** la partie de couvercle (4) est réalisée en forme de L et présente du côté frontal (16) un évidement (10) qui est fermé dans le cas d'un assemblage par une pièce rapportée (9) de la partie de socle (3) et qui est ouvert dans l'autre assemblage et forme une ouverture d'entrée (6) du côté frontal.

5. Carter selon la revendication 4, **caractérisé en ce que** la partie de couvercle (4) présente sur son côté inférieur latéralement à chaque fois un évidement (18) et une pièce rapportée (17) et **en ce que** dans un assemblage, les évidements (18) sont fermés à chaque fois par une pièce rapportée (19) de la partie de socle (3) et **en ce que** dans l'autre assemblage, les évidements (18) de la pièce de couvercle (4) forment avec des évidements (7') de la partie de socle (3) des ouvertures d'entrée latérales (7).

6. Carter selon l'une quelconque des revendications 1 à 5, **caractérisé en ce que** la partie de couvercle (4) et la partie de socle (3) sont assemblées par engagement positif.

7. Carter selon l'une quelconque des revendications 1 à 6, **caractérisé en ce que** dans le cas d'un assemblage, deux ouvertures d'entrée latérales (7) sont formées et dans le cas de l'autre assemblage, une ouverture d'entrée frontale (6) est formée.

8. Carter selon l'une quelconque des revendications 1 à 7, **caractérisé en ce que** des moyens de guidage (21, 9) sont formés sur la partie de socle (3) et/ou sur la partie de couvercle (4) pour le positionnement et la fixation d'une section de conduite tubulaire (2a, 2b).

9. Carter selon l'une quelconque des revendications 1 à 8, **caractérisé en ce que** qu'il est prévu pour des conduites de dérivation sur un raccord de corps de chauffe.

10. Carter selon l'une quelconque des revendications 1 à 9, **caractérisé en ce que** la ligne de séparation entre la partie de couvercle (4) et la partie de socle (3) s'étend dans l'axe longitudinal d'au moins une ouverture d'entrée (6, 7).
